# EUROPÄISCHE PATENTSCHRIFT

(11) **EP 0 651 028 B1**
(45) Veröffentlichungstag und Bekanntmachung des Hinweises auf die Patenterteilung: **28.11.2001**
(21) Anmeldenummer: 94810606.7
(22) Anmeldetag: 19.10.1994
(51) Int. Cl.: C09B 67/22, D06P 3/24, D06P 3/16

(54) **Verfahren zum Trichromie-Färben oder -Bedrucken**
Process of trichromic dyeing or printing
Procédé de teinture ou d'impression en trichromie

(30) Priorität: 28.10.1993 CH 325193
(43) Veröffentlichungstag der Anmeldung: 03.05.1995
(73) Patentinhaber: Ciba Specialty Chemicals Holding Inc., 4057 Basel (CH)
(72) Erfinder: Adam, Jean-Marie, Dr., F-68300 Rosenau (FR); Jordine, Guido, Dr., D-79098 Freiburg (DE)

(56) Entgegenhaltungen:
- EP-A- 0 387 201

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Aus der EP-A-0 387 201 sind Farbstoffmischungen für das Trichromieverfahren bekannt, welche Mischungen von blauen Anthrachinonfarbstoffen enthalten, die auf dem Phenylrest Acetaminosubstituent tragen.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder -Bedrucken von natürlichen oder synthetischen Polyamidfasermaterialien, welches dadurch gekennzeichnet ist, dass man einen gelb- oder orangefärbenden Farbstoff der Formel (1) 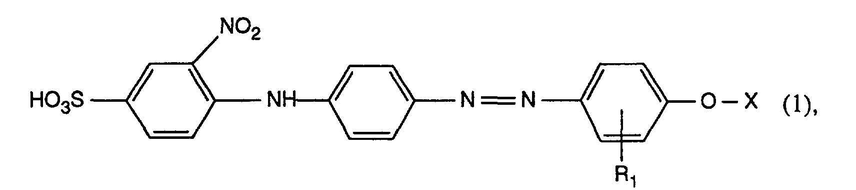
worin R₁ Wasserstoff, C₁-C₄-Alkyl, C₁-C₄-Alkoxy oder Halogen und X Wasserstoff oder C₁-C₄-Alkyl ist;
zusammen mit einem rotfärbenden Farbstoff der Formel (3) 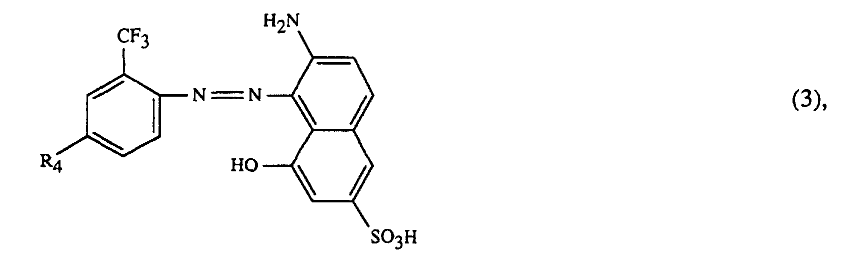
worin R₄ Wasserstoff, C₂-C₄-Alkanoylamino oder Halogen bedeutet;
und zusammen mit einer Mischung der blaufärbenden Farbstoffe der Formeln (4) und (5) 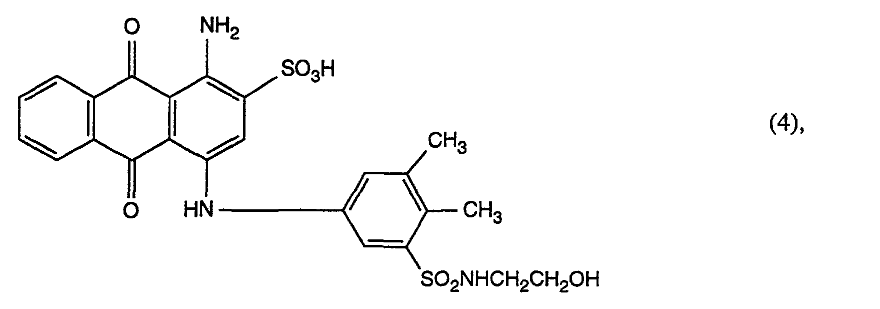 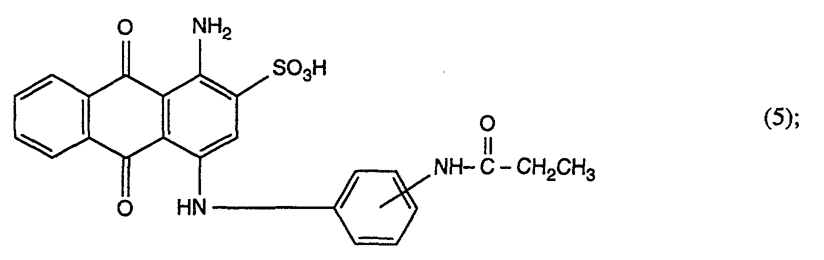 verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als C₁-C₄-Alkyl kommen für X und R₁ Methyl, Aethyl, Propyl, Isopropyl, Butyl, Isobutyl, sek.-Butyl oder tert.-Butyl in Betracht. Bevorzugt sind hierbei Methyl oder Aethyl, insbesondere Methyl.

Als C₁-C₄-Alkoxy kommt für R₁ beispielsweise Methoxy, Aethoxy, Propoxy, Isopropoxy, Butoxy, sek.-Butoxy, Isobutoxy oder tert.-Butoxy in Betracht.

Als Halogen kommen für R₁ und R₄ beispielsweise Fluor oder Brom und insbesondere Chlor in Betracht.

Als C₂-C₄-Alkanoylamino kommen für R₄ z.B. Propionylamino oder insbesondere Acetylamino in Betracht.

Der Rest X ist bevorzugt Wasserstoff oder Methyl, insbesondere Wasserstoff.

Der Rest R₁ ist bevorzugt Wasserstoff oder C₁-C₄-Alkyl, insbesondere C₁-C₄-Alkyl und vorzugsweise Methyl.

Der Rest R₄ ist bevorzugt Wasserstoff oder Halogen, insbesondere Chlor.

Als gelb- oder orangefärbende Farbstoffe der Formel (1) verwendet man bevorzugt solche, worin R₁ Methyl und X Wasserstoff ist.

Als rotfärbende Farbstoffe der Formel (3) verwendet man bevorzugt solche, worin R₄ Chlor ist.

Gemäss einer bevorzugten Ausführungsform verwendet man als rotfärbenden Farbstoff einen Farbstoff der Formel (3), für welchen die oben angegebenen Bedeutungen und Bevorzugungen gelten.

Als blaufärbende Farbstoffe der Formel (5) verwendet man bevorzugt solche, worin der Rest der Formel -NHCOCH₂CH₃ in meta- oder para-Stellung, insbesondere in meta-Stellung, gebunden ist.

Vorzugsweise verwendet man hierbei neben der Mischung der Farbstoffe der Formeln (4) und (5) keine weiteren blaufärbenden Farbstoffe.

Besonders bevorzugt verwendet man in dem erfindungsgemässen Verfahren einen Farbstoff der Formel (1), worin R₁ Methyl und X Wasserstoff ist, zusammen mit einem Farbstoff der Formel (3), worin R₄ Chlor ist,
und zusammen mit einer Mischung der Farbstoffe der Formeln (4) und (5), wobei im Farbstoff der Formel (5) der Rest der Formel -NHCOCH₂CH₃ in meta-Stellung gebunden ist.

Eine ganz besonders bevorzugte Ausführungsform des erfindungsgemässen Verfahrens ist dadurch gekennzeichnet, dass man ausser dem Farbstoff der Formel (1) keinen weiteren gelb- oder orangefärbenden Farbstoff verwendet.

Einen weiteren Gegenstand der vorliegenden Erfindung stellen Farbstoffmischungen dar, welche einen gelb- oder orangefärbenden Farbstoff der Formel (1) zusammen mit der Mischung der blaufärbenden Farbstoffe der Formeln (4) und (5) und einem rotfärbenden Farbstoff der Formel (3) enthält. Hierbei gelten für die Farbstoffe der Formeln (1), (3), (4) und (5) die oben angegebenen Bedeutungen und Bevorzugungen.

Die in dem erfindungsgemässen Verfahren zum Trichromie-Färben oder -Bedrucken verwendeten Farbstoffe der Formeln (1), (3), (4) und (5) sind bekannt oder können in Analogie zu bekannten Farbstoffen hergestellt werden.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze wie z.B. Kochsalz oder Dextrin enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass-, Nassreib- und Lichtechtheit erhalten.

In dem folgenden Beispiel stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Ethylenoxid) gegeben. Anschliessend wird das Bad mit Essigsäure auf einen pH-Wert von 6 gestellt. Dann gibt man eine Mischung von 0,22 Teilen eines Farbstoffs, der in Form der freien Säure der Verbindung der Formel 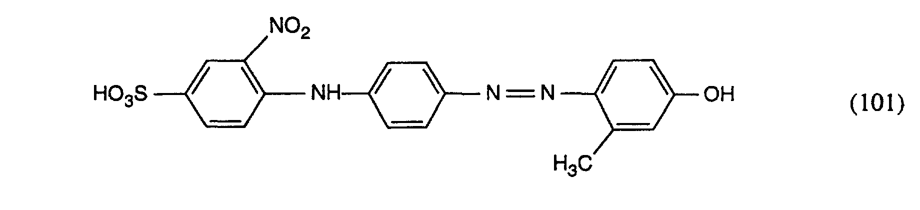 entspricht,
0,1 Teilen eines Farbstoffs, der in Form der freien Säure der Verbindung der Formel 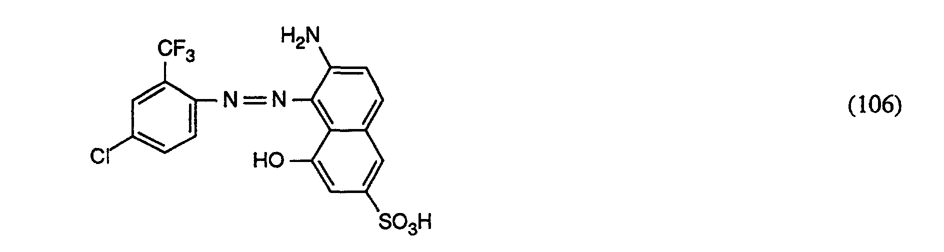 entspricht,
0,055 Teilen eines Farbstoffs, der in Form der freien Säure der Verbindung der Formel 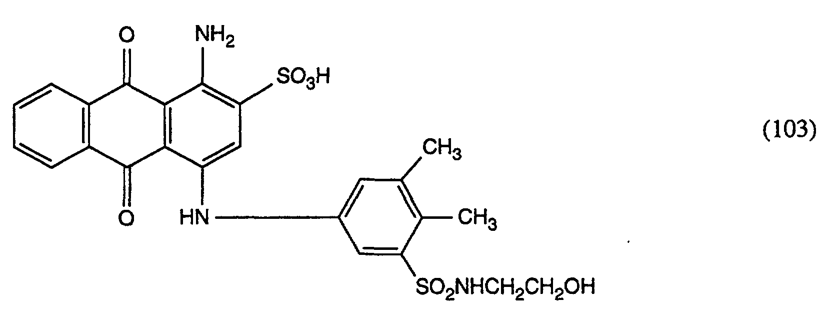 entspricht, und
0,055 Teilen eines Farbstoffs, der in Form der freien Säure der Verbindung der Formel 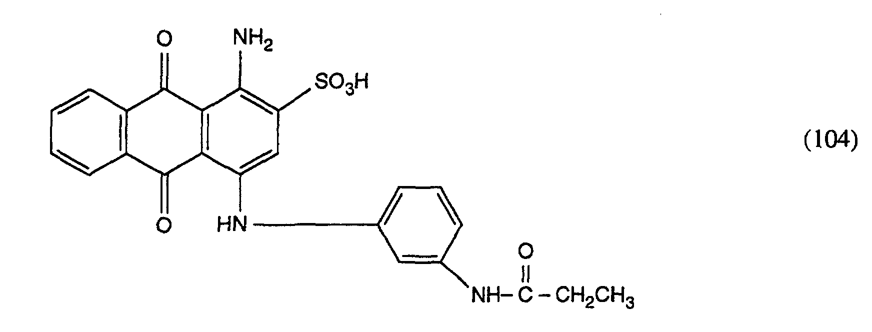 entspricht, zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

Beispiele 2 und 3: Verfährt man wie in Beispiel 1 angegeben, verwendet jedoch anstelle der Farbstoffe der Formeln (101), (103), (104) und (106) die in der folgenden Tabelle 1 angegebenen Farbstoffe, so erhält man in den in Tabelle 1 angegebenen Farbtönen gefärbte Gewebestücke.

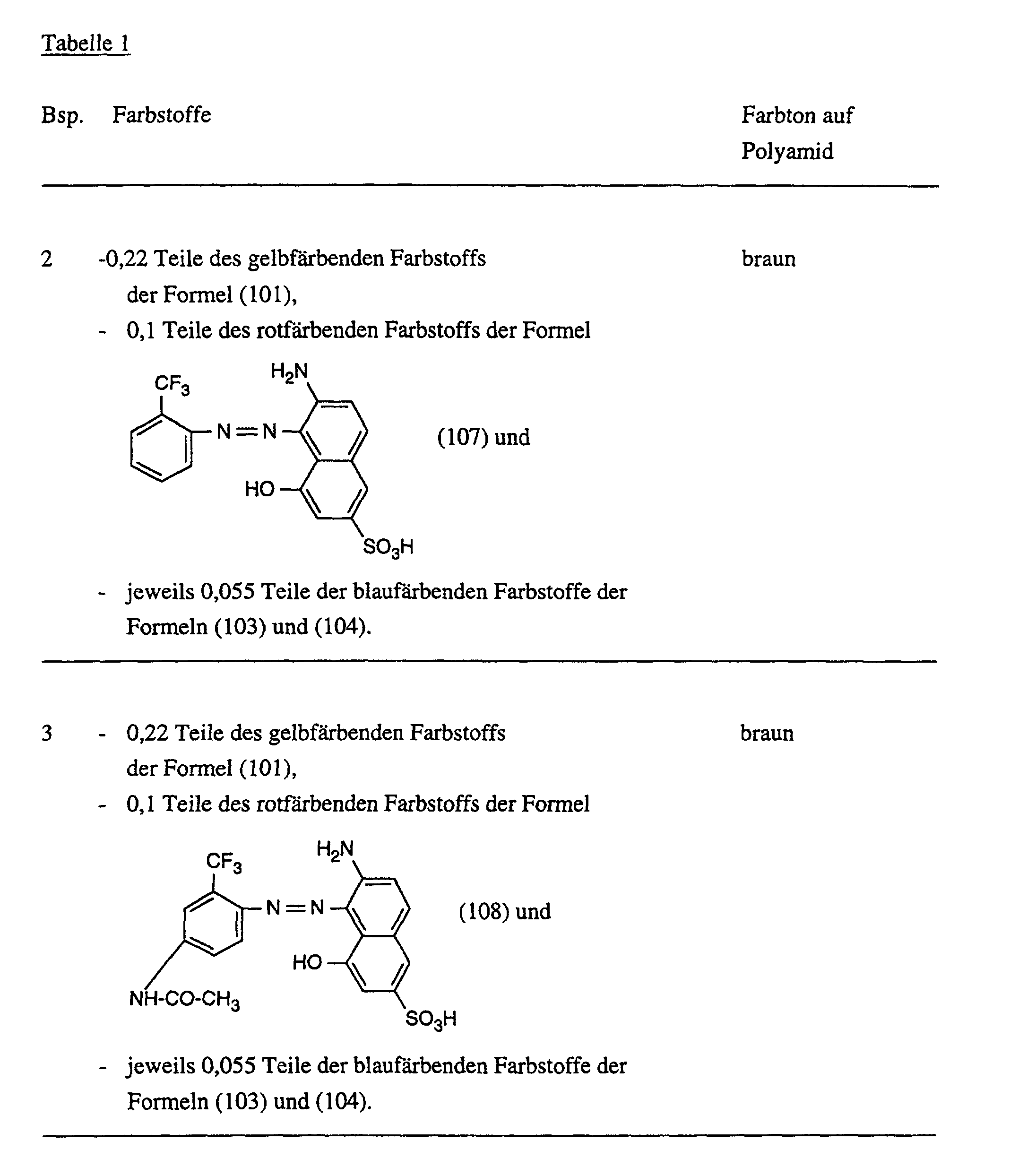

## Patentansprüche

1. Verfahren zum Trichromie-Färben oder -Bedrucken von natürlichen oder synthetischen Polyamidfasermaterialien, **dadurch gekennzeichnet, dass** man einen gelb- oder orangefärbenden Farbstoff der Formel (1) 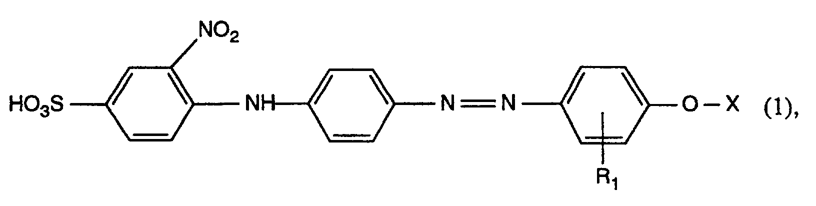
worin R₁ Wasserstoff, C₁-C₄-Alkyl, C₁-C₄-Alkoxy oder Halogen und X Wasserstoff oder C₁-C₄-Alkyl ist;
zusammen mit einem rotfärbenden Farbstoff der Formel (3) 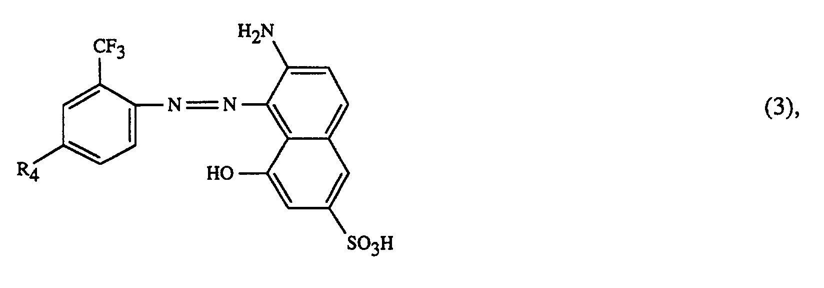
worin R₄ Wasserstoff, C₂-C₄-Alkanoylamino oder Halogen bedeutet;
und zusammen mit einer Mischung der blaufärbenden Farbstoffe der Formeln (4) und (5) 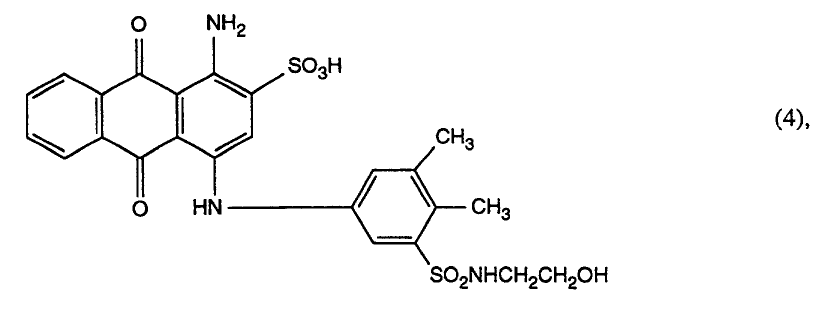 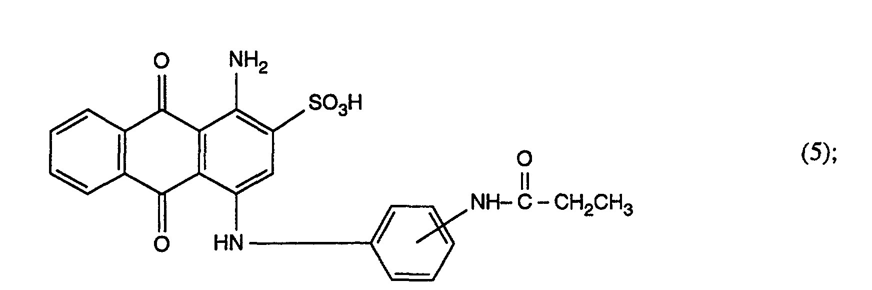 verwendet.

2. Verfahren gemäss Anspruch 1, **dadurch gekennzeichnet, dass** X Wasserstoff ist.

3. Verfahren gemäss Anspruch 1, **dadurch gekennzeichnet, dass** R₁ Methyl und X Wasserstoff ist.

4. Verfahren gemäss einem der Ansprüche 1 bis 3, **dadurch gekennzeichnet, dass** R₄ Chlor ist.

5. Verfahren gemäss einem der Ansprüche 1 bis 4, **dadurch gekennzeichnet, dass** im Farbstoff der Formel (5) der Rest der Formel -NHCOCH₂CH₃ in meta-Stellung gebunden ist.

6. Verfahren gemäss Anspruch 1, **dadurch gekennzeichnet, dass** man einen Farbstoff der Formel (1), worin R₁ Methyl und X Wasserstoff ist,
zusammen mit einem Farbstoff der Formel (3), worin R₄ Chlor ist,
und zusammen mit einer Mischung der Farbstoffe der Formeln (4) und (5), wobei im Farbstoff der Formel (5) der Rest der Formel -NHCOCH₂CH₃ in meta-Stellung gebunden ist, verwendet.

7. Verfahren gemäss einem der Ansprüche 1 bis 6, **dadurch gekennzeichnet, dass** man ausser dem Farbstoff der Formel (1) keinen weiteren gelb- oder orangefärbenden Farbstoff verwendet.

8. Verfahren gemäss einem der Ansprüche 1 bis 7, **dadurch gekennzeichnet, dass** man Wolle oder synthetisches Polyamidfasermaterial färbt oder bedruckt.

9. Verfahren gemäss Anspruch 8, **dadurch gekennzeichnet, dass** man synthetisches Polyamidfasermaterial färbt oder bedruckt.

## Claims

1. A process for trichromatic dyeing or printing of natural or synthetic polyamide fibre materials, **characterized in that** it comprises using a yellow or orange-dyeing dye of formula 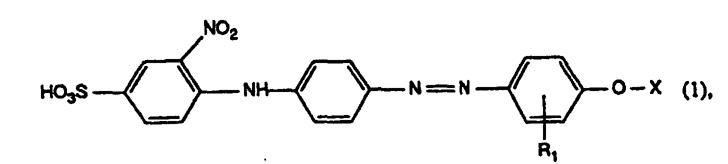
wherein R₁ is hydrogen, C₁-C₄alkyl, C₁-C₄alkoxy or halogen, and
X is hydrogen or C₁-C₄alkyl;
together with a red-dyeing dye of formula (3) 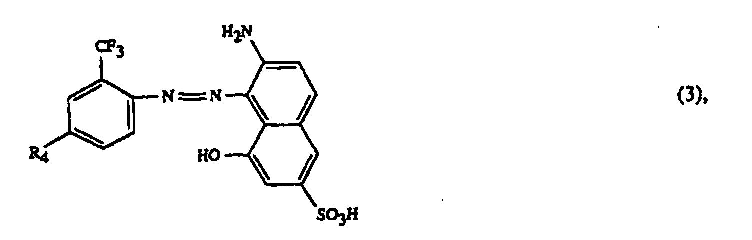
wherein R₄ is hydrogen, C₂-C₄alkanoylamino or halogen;
and together with a mixture of the blue-dyeing dyes of formulae (4) and (5)

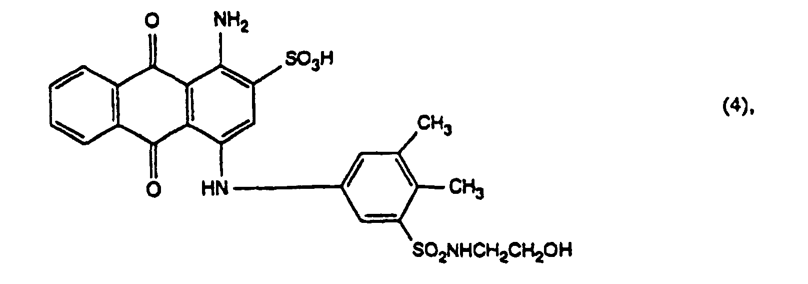

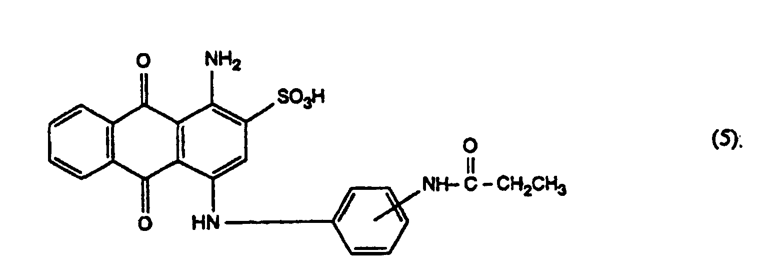

2. A process according to claim 1, **characterized in that** X is hydrogen.

3. A process according to claim 1, **characterized in that** R₁ is methyl and X is hydrogen.

4. A process according to any one of claims 1 to 3, **characterized in that** R₄ is chloro.

5. A process according to any one of claims 1 to 4, **characterized in that** the radical of formula -NHCOCH₂CH₃ in the dye of formula (5) is in meta-position.

6. A process according to claim 1, **characterized in that** it comprises using a dye of formula (1), wherein R₁ is methyl and X is hydrogen, together with a dye of formula (3), wherein R₄ is chloro, and together with a mixture of the dyes of formulae (4) and (5), the radical of formula -NHCOCH₂CH₃ being in meta-position in the dye of formula (5).

7. A process according to any one of claims 1 to 6, **characterized in that** it comprises not using an additional yellow- or orange-dyeing dye besides the dye of formula (1).

8. A process according to any one of claims 1 to 7, **characterized in that** it comprises dyeing or printing wool or synthetic polyamide fibre material.

9. A process according to claim 8, **characterized in that** it comprises dyeing or printing synthetic polyamide fibre material.

## Revendications

1. Procédé pour la teinture ou l'impression en trichromie de fibres polyamides naturelles ou synthétiques, **caractérisé en ce qu'**on utilise un colorant qui teint en jaune ou en orange de formule (I) 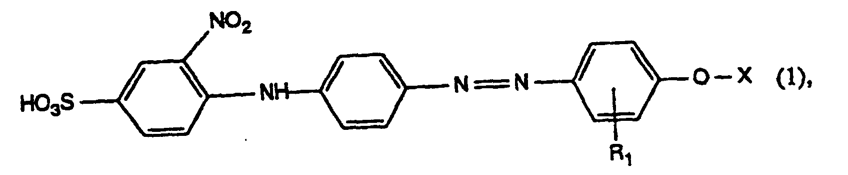 où
R₁ représente un atome d'hydrogène, un groupe alkyle en C₁-C₄, alkoxy en C₁-C₄, ou halogène et
x représente un atome d'hydrogène ou un groupe alkyle en C₁-C₄ ;
conjointement avec un colorant qui teint en rouge de **formule (3)** 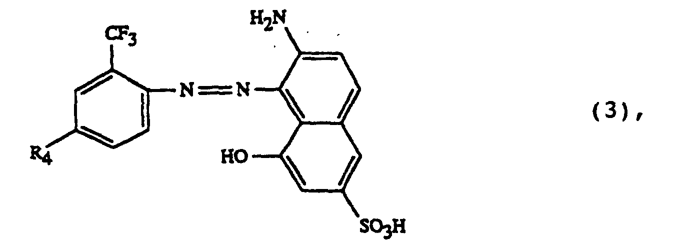 où
R₄ représente un atome d'hydrogène, un groupe (alcanoyl en-C₂-C₄)amino ou halogène ;
et conjointement avec un mélange de colorants qui teignent en bleu de formules (4) et (5)

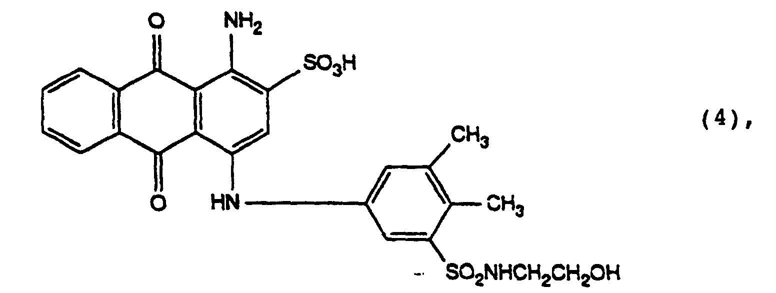

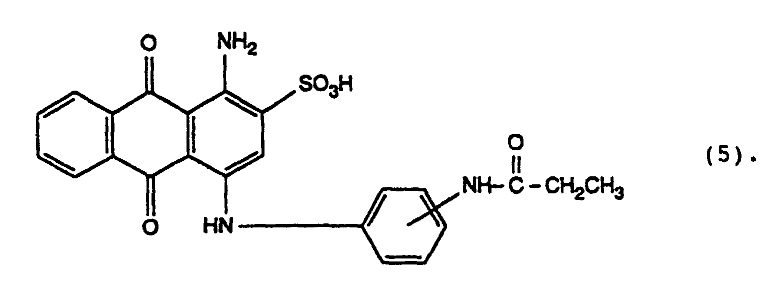

2. Procédé selon la revendication 1, **caractérisé en ce que** X représente un atome d'hydrogène.

3. Procédé selon la revendication 1, **caractérisé en ce que** R₁ représente un groupe méthyle et X représente un atome d'hydrogène.

4. Procédé selon l'une des revendications 1 à 3, **caractérisé en ce que** R₄ représente un atome de chlore.

5. Procédé selon l'une des revendications 1 à 4, **caractérisé en ce que** le reste de formule -NHCOCH₂CH₃ dans le colorant de formule (5) est lié en position méta.

6. Procédé selon la revendication 1, **caractérisé en ce qu'**on utilise un colorant de formule (1) où R₁ représente un groupe méthyle et X un atome d'hydrogène,
conjointement avec un colorant de formule (3), où R₄ représente un atome de chlore,
et conjointement avec un mélange de colorants de formules (4) et (5), où le reste de formule -NHCOCH₂CH₃ dans le colorant de formule (5) est lié en position méta.

7. Procédé selon l'une des revendications 1 à 6, **caractérisé en ce que**, outre le colorant de formule (1), on n'utilise pas d'autres colorant teignant en orange ou en jaune.

8. Procédé selon l'une des revendications 1 à 7, **caractérisé en ce qu'**on teint ou imprime la laine ou une matière fibreuse polyamide synthétique.

9. Procédé selon la revendication 8, **caractérisé en ce qu'**on teint ou imprime la matière fibreuse polyamide synthétique.
